# EUROPEAN PATENT APPLICATION

(11) **EP 4 822 070 A1**
(43) Date of publication of application: **14.10.2026**
(21) Application number: 25168932.9
(22) Date of filing: 07.04.2025
(51) Int. Cl.: D01D 5/34, B29C 48/05, D01F 1/04, D01F 1/10, D01F 6/46, D01F 8/04, D01F 8/06, E01C 13/08, D01F 6/60, D01F 8/12

(54) **ARTIFICIAL TURF FIBER WITH BARRIER LAYER**

(71) Applicant: Polytex Sportbeläge Produktions-GmbH, 47929 Grefrath (DE)
(72) Inventor: Sick, Stephan, 76534 Baden-Baden (DE); Grochla, Dario, 44869 Bochum (DE); Sander, Dirk, 47647 Kerken (DE)
(74) Representative: Richardt Patentanwälte PartG mbB

(57) **Abstract**

Disclosed is an artificial turf fiber comprising a core (362) comprising or consisting of an aged polymer, a cladding layer (366) comprising or consisting of a virgin polymer, and a barrier layer (364) positioned between the core and the cladding layer, said barrier layer being adapted to inhibit the migration of molecules from the core to the cladding layer.

## Description

### FIELD OF THE INVENTION

The invention relates to artificial turf fibers and methods for manufacturing the same.

### BACKGROUND

In recent years, there has been increasing emphasis on sustainable practices across industries, including the development of sports flooring and artificial turf. A topic of particular relevance in this context is the reduction and reuse of plastic waste, much of which is generated from single-use and aged polymer products. To mitigate this issue, efforts have been made to incorporate recycled or aged plastics into new products, such as artificial turf fibers. This approach helps reduce waste and reliance on virgin materials, aligning with global sustainability goals.

For example, patent application EP3604637A1 discloses a method of manufacturing artificial turf from a three-phase system that also comprises an aged polymer.

However, the integration of aged plastics in sports surfaces is not without complications. A significant concern arises from the potential migration of harmful substances that may be present in the recycled materials.

The migration of these substances might possibly result in contamination of the environment or exposure to individuals who frequently come into contact with the turf, such as athletes and children. This is particularly relevant for artificial turf used in sports facilities, playgrounds, and other high-contact applications. Additionally, aged plastics often exhibit diminished mechanical properties due to degradation from prior use and environmental exposure. This can compromise the durability and performance of the final product. For example, aged polymers may display brittleness, reduced flexibility, or instability under UV radiation, making them less suitable for long-term use in outdoor settings. The brittleness of the material may in some cases result in the formation of micro cracks during use, making the risk that harmful substances leave the sports floor component comprising the aged plastics even greater. One approach to mitigate these risks is to thoroughly assess the substances used in the production of plastic materials intended for reuse in artificial sports floors and/or conduct a series of chemical analyses prior to reusing aged plastics. However, both methods are highly time-consuming, and chemical analyses can be prohibitively expensive.

### SUMMARY OF THE INVENTION

It is an objective to provide for an improved artificial turf fiber and method for manufacturing the same. The objectives underlying the invention are solved by the features of the independent claims.

In one aspect disclosed herein is an artificial turf fiber. The fiber comprises a core comprising or consisting of an aged polymer, a cladding layer comprising or consisting of a virgin polymer, and a barrier layer positioned between the core and the cladding layer. The barrier layer is adapted to inhibit the migration of molecules from the core to the cladding layer.

In a further aspect, disclosed herein is a method of manufacturing an artificial turf fiber.

The method comprises co-extruding three material streams into a monofilament. A first material stream, the core polymer stream, comprises or consists of an aged polymer and forms the core of the monofilament. A second material stream, the cladding polymer stream, comprises or consists of a virgin polymer and forms a cladding layer of the monofilament. A third material stream, the barrier stream, forms a barrier layer in the monofilament between the core and the cladding layer, said barrier layer being adapted to inhibit the migration of molecules from the core to the cladding layer.

In a further aspect, disclosed herein is a method of manufacturing an artificial turf fiber comprising: co-extruding a first and a second material stream through an extrusion die into a monofilament, wherein the first material stream, the core polymer stream, comprises a barrier substance and an aged polymer, and wherein the second polymer stream, the cladding polymer stream, surrounds the core polymer stream and comprises or consists of a virgin polymer; and quenching the co-extruded core polymer stream and the cladding polymer stream in a quenching unit to form the monofilament, wherein the cladding polymer stream forms a cladding layer that surrounds the core of the monofilament. The barrier substance and the distance between the extrusion die and the quenching unit are selected such that: the barrier substance migrates to the surface of the core polymer stream before the monofilament reaches the quenching unit, the migrated barrier substance forms a barrier layer (364) between the core and the cladding layer, and the barrier layer is adapted to inhibit the migration of molecules from the core to the cladding layer.

In a further aspect, disclosed herein is a method of manufacturing an artificial turf fiber, wherein the method comprises: extruding a core polymer stream through an extrusion die into a core filament, wherein the core polymer stream comprises a barrier substance and an aged polymer; and quenching the extruded core polymer stream in a quenching unit to form a core monofilament. The barrier substance and the distance between the extrusion die and the quenching unit are chosen such that the barrier substance is allowed to migrate to the surface of the core polymer stream before it reaches the quenching unit, the barrier substance thereby forming a barrier layer on the surface of the quenched core monofilament. The method further comprises encasing the core monofilament with a cladding polymer layer, in particular by spraying the core monofilament with the liquid cladding polymer, or by drawing the core monofilament through a bath of liquid cladding polymer; and allowing the applied cladding polymer to harden and form a barrier layer, thereby producing a multilayer monofilament. The multilayer monofilament comprises a core comprising or consisting of the aged polymer. The core is enclosed by the barrier layer, and the barrier layer is enclosed by the cladding layer. The barrier layer is adapted to inhibit the migration of molecules from the core to the cladding layer.

It is understood that one or more of the examples described herein may be combined as long as the combined examples are not mutually exclusive.

### BRIEF DESCRIPTION OF THE DRAWINGS

In the following, examples are described in greater detail making reference to the drawings in which:
Fig. 1 is a flow chart of a method of manufacturing an artificial turf fiber;
Fig. 2 is a cross-section of the artificial turf fiber;
Fig. 3 is a cross-section of another example of an artificial turf fiber;
Fig. 4 shows cross-sections of three other artificial turf fiber examples;
Fig. 5 is a flowchart of a method of manufacturing an artificial turf;
Fig. 6 illustrates an example for a core polymer mixture;
Fig. 7 illustrates a further example for a core polymer mixture;
Fig. 8 is an illustration of the stretching of polymer beads during extrusion;
Fig. 9A illustrates polymer threads comprised in a base polymer of the extruded core polymer mixture;
Fig. 9B is an electron microscope image of a longitudinal cross-section of the extruded fiber core comprising thread-like regions of aged polymer;
Fig. 10 illustrates a coextrusion nozzle for concentrically extruding three material streams;
Fig. 11 illustrates the integration of artificial turf fibers into a carrier, demonstrating the process of forming artificial turf;
Fig. 12 is a flow-chart of a further method of manufacturing a multi-layer artificial turf fiber monofilament; and
Fig. 13 is a flow-chart of a further method of manufacturing a multi-layer artificial turf fiber monofilament.

### DETAILED DESCRIPTION

The artificial turf fiber and the methods of manufacturing the same may offer significant technical and environmental benefits:

The barrier layer may help inhibiting the migration of potentially harmful substances. In addition, embedding the aged polymer in the core and not in the cladding may ensure that the mechanical and aesthetic properties of the final product meet the requirements of the respective types of use of the artificial turf. Hence, the barrier layer may effectively inhibit the migration of harmful substances from the aged polymer core while the specific structure of the fiber may ensure or enhance the mechanical properties and usability of the fiber. The solution may enable the safe and efficient use of aged plastics in artificial turf, reducing environmental impact without compromising health, safety, or performance.

For example, some types of aged plastics have been reported to comprise substances such as PFAS, PFOS, phthalates, heavy metals, and PAHs.

Phthalates are often added to sports floor components to increase flexibility. They are suspected of acting as endocrine disruptors. Heavy metals are sometimes found in stabilizers and pigments; PAHs have been reported to be released from carbon black used as a reinforcing filler in rubber products. By using a barrier layer, aged plastic potentially comprising undesired and potentially toxic substances may be reused in a manner that may prevent these substances to reach the fiber surface.

As the core with the aged polymer is encapsulated by the barrier layer, and as the cladding layer is preferably composed of virgin polymers, this multi-layer structure may ensure that the outer surface of the fiber is free of these substances. As a result, a detailed chemical analysis or comprehensive investigation of the aged plastic's composition may not be required, as the aged polymers are securely encapsulated.

According to some examples, the barrier layer is adapted to inhibit migration of at least one of:
- Per- and Polyfluoroalkyl Substances -PFAS,
- Perfluorooctane Sulfonates - PFOS,
- PFAS precursor compounds, in particular fluorotelomer alcohols and fluorotelomer sulfonates and their decay products, in particular short-chained (< 8 carbon atom backbone) PFAS precursor compounds;
- Release agents, e.g., silicone-based release agents, or fluoropolymer-based release agents
- Siloxanes,
- Plasticizers, in particular oils,
- Phthalates, e.g., DEHP, DBP, BBP;
- Heavy metals;
- Polycyclic Aromatic Hydrocarbons (PAHs); and
- Substances with a molecular weight of more than 400 g/mol, in particular of more than 200 g/mol.

According to some examples, the cladding layer is free of at least one of (or free of all of):
- Per- and Polyfluoroalkyl Substances -PFAS,
- Perfluorooctane Sulfonates - PFOS,
- PFAS precursor compounds, in particular fluorotelomer alcohols and fluorotelomer sulfonates and their decay products, in particular short-chained (< 8 carbon atom backbone) PFAS precursor compounds;
- Release agents, e.g., silicone-based release agents, or fluoropolymer-based release agents
- Siloxanes,
- Plasticizers, in particular oils,
- Phthalates, e.g., DEHP, DBP, BBP;
- Heavy metals; and
- Polycyclic Aromatic Hydrocarbons (PAHs).

This may ensure that the outermost layer of the fiber, which comes into direct contact with users, is non-toxic and environmentally safe.

According to some examples, the barrier stream and hence also the barrier layer comprises or consists of an acrylate.

The inventors have observed that acrylates provide superior impermeability to harmful substances, such as PFAS and PAHs, ensuring the safety of the artificial turf in applications involving human contact. Their flexibility and compatibility with other polymers enhance the overall structural integrity of the fiber. A barrier layer made of acrylate has been observed to tightly adhere both to the core and the cladding polymer, in particular in embodiments where the core and/or the cladding comprise or predominantly (> 50 weight %) consist of polymers such as polyethylene (PE), polyamide (PA) or polypropylene (PP).

Hence, acrylates do not only inhibit the migration of molecules from the aged polymer core to the cladding layer, they also protect the different layers of the fiber from delamination and protect the fiber from splicing (delamination in longitudinal direction).

According to some examples, the acrylate is selected from a group comprising:
- ethylene ethyl acrylate (EEA);
- ethylene butyl acrylate (EBA);
- ethylene methyl acrylate (EMA);
- ethylene acrylate copolymer (EA);
- ethylene glycidyl methacrylate (EGMA);
- poly(ethyl acrylate) (PEA),
- an acrylate-functionalized compatibilizer, in particular one or more of:
   - Glycidyl Methacrylate (GMA),
   - a graft copolymer or block copolymer of Styrene-Ethylene-Butylene-Styrene (SEBS) with glycidyl methacrylate,
   - a graft copolymer or block copolymer of polypropylene with an acrylate, e.g., with ethyl acrylate or with glycidyl methacrylate;
   - a graft copolymer or block copolymer of polyethylene with an acrylate, e.g., with ethyl acrylate or with a glycidyl methacrylate.

In particular, the acrylate can be ethylene ethyl acrylate (EEA).

The acrylates may be copolymers or block copolymers, in particular ethylene ethyl acrylate copolymers.

The above-mentioned types of acrylates, in particular EEA, have been observed by the inventors to provide for exceptionally good barrier properties, which effectively inhibit the migration of molecules from the aged polymer core to the cladding layer.

According to some examples, the barrier layer is made of or comprises an acrylate copolymer, acrylate block polymer or a polymer grafted with acrylates. The polymer may in particular be polyethylene. In other embodiments, the barrier layer is made of or comprises a blend of the acrylate with a polymer. The polymer that is combined with (e.g., copolymerized, grafted or blended) with the acrylate may in particular be a polymer being of the same type as the virgin polymer of the cladding layer/cladding polymer stream, in particular PE, PP or PA. In some embodiments, the barrier layer is made of a polymer that is acrylate-functionalized, whereby the polymer may be of the same type as the virgin polymer of the cladding layer/cladding polymer stream. For example, the barrier layer may be made of graft copolymer or block copolymer of polypropylene or polyethylene with an acrylate.

Manufacturing a barrier layer from a blend of one or more acrylates with polymers that are chemically compatible with the virgin polymer used in the cladding layer has been observed to protect the fiber from delamination even further. For instance, polymers that are chemically compatible with the virgin polymer can be polymers with similar or identical polymer type, e.g., identical or similar types of PE, or identical or similar types of PA. Hence, using an acrylate-polymer blend may improve adhesion between the barrier and cladding layers, thereby enhancing the durability of the fiber under mechanical stress. Additionally, the use of chemically compatible polymers ensures seamless integration of layers during the co-extrusion process.

According to some examples, the barrier stream may comprise fillers (e.g., talc, silica) to modify mechanical or barrier properties, and/or plasticizers to enhance flexibility and/or stabilizers to improve heat or UV resistance during processing. Additives such as stabilizers may extend the lifespan of the turf fiber in outdoor environments by improving resistance to UV radiation and thermal degradation. Fillers may provide additional customization options for adjusting strength and impermeability, catering to specific application requirements.

According to some examples, the core polymer stream comprises a blend of the aged polymer and a further virgin polymer.

This may ensure that the core does not become too brittle. In addition, the configuration may improve the processability of the aged material and may allow the core to achieve improved homogeneity and strength. This may ensure a robust and reliable fiber core suitable for long-term use in artificial turf.

According to some examples, the core polymer stream is a multi-phase system in which the aged polymer forms beads within a further virgin polymer, and wherein the beads are surrounded by a compatibilizer.

The multi-phase design may improve the overall mechanical performance of the core while effectively encapsulating aged polymer particles to limit molecular migration.

According to embodiments, the compatibilizer is any one of the following: a maleic acid grafted on polyethylene or polyamide; a maleic anhydride grafted on a free-radical-initiated graft copolymer of polyethylene; Styrene-Ethylene-Butylene-Styrene -SEBS, Ethylene-Vinyl Acetate - EVA, Ethylene-Propylene-Diene -EPD, or polypropylene with an unsaturated acid or its anhydride, such as maleic acid, glycidyl methacrylate, or ricinoloxazoline maleinate; a graft copolymer of SEBS with glycidyl methacrylate; a graft copolymer of EVA with mercaptoacetic acid and maleic anhydride; a graft copolymer of EPDM (ethylene propylene diene monomer rubber) with maleic anhydride; a graft copolymer of polypropylene with maleic anhydride; a polyolefin-graft-polyamidepolyethylene or polyamide; and a polyacrylic acid-type compatibilizer.

According to some examples, the co-extrusion is performed such that the core polymer stream, the barrier stream, and the cladding polymer stream are concentrically arranged.

A concentrical co-extrusion process may ensure a uniform distribution of material stresses and may optimize the protective function of the barrier layer: Concentric arrangement has been observed by the inventors to enhance the structural stability of the fiber, ensuring consistent performance under physical stress. It also simplifies the manufacturing process by enabling precise layer placement during extrusion.

According to some examples, the co-extrusion is performed via a triple-stream co-extrusion nozzle having three concentrically arranged material pathways.

The use of a triple-stream co-extrusion nozzle with three concentrically arranged pathways may ensure seamless integration of the core, barrier layer, and cladding layer and may allow for efficient production of complex, multi-layered fibers with minimal material waste. This method supports high throughput while maintaining precise control over layer thickness and uniformity.

According to some examples, the method further comprises quenching the extruded monofilament and stretching the quenched monofilament.

Quenching rapidly cools the fiber to stabilize its structure, while stretching aligns the polymer chains to enhance mechanical properties. The quenching and stretching may significantly improve the tensile strength, elasticity, and dimensional stability of the fiber, making it suitable for demanding applications such as sports fields and playgrounds. Furthermore, in case the core comprises a three-phase system, the polymer beads may be stretched and reshaped into threads which are oriented parallel to the longitudinal axis of the fiber, thereby further increasing the tensile strength and the ability of the fiber to re-erect after having been trampled down.

In correspondence with the method of manufacturing an artificial turf fiber, disclosed herein is also the respective artificial turf fiber comprising a core, a barrier layer and a cladding layer. The core comprises or consists of an aged polymer. The cladding layer comprises or consists of a virgin polymer. And the barrier layer is positioned between the core and the cladding layer and is adapted to inhibit the migration of molecules from the core to the cladding layer.

Unless explicitly or implicitly stated otherwise, the features described in relation to the core polymer stream are equally applicable to the core of the fiber, and vice versa, the features described in relation to the cladding polymer stream are equally applicable to the cladding layer of the fiber, and vice versa, and the features described in relation to the barrier stream are equally applicable to the barrier layer of the fiber, and vice versa.

According to some examples, the barrier layer comprises or consists of an acrylate.

According to some examples, the core comprises the aged polymer and a further virgin polymer, and the aged polymer forms threads oriented parallel to the longitudinal axis of the monofilament. The threads are surrounded by a compatibilizer and are embedded within a matrix of the further virgin polymer.

According to some examples, the core, the barrier layer, and cladding layer are concentrically arranged.

In a further aspect, disclosed herein is an artificial turf comprising a carrier and comprising a plurality of artificial turf fibers according to any one of the examples described herein, wherein the artificial turf fibers are integrated in the carrier.

The carrier can be made, for example, of woven or non-woven polypropylene (PP), polyethylene (PE), or a hybrid fabric reinforced with glass fibers or polymer fibers for increased durability and dimensional stability. The carrier typically includes a backing layer also referred to as "secondary backing" that improves the fixation of the artificial turf fibers. The secondary backing can be, for example, polyurethane (PU) or latex. The carrier can be single-layered or multi-layered.

Hence, embodiments of the invention may achieve a balanced solution to the challenges of reusing aged polymers in artificial turf. It provides a safe, durable, and environmentally responsible product with optimized performance for various applications.

Different methods can be used for manufacturing an artificial turf fiber having a core with an aged polymer, a cladding layer made of a virgin polymer, and a barrier layer positioned between the core and the cladding layer.

Disclosed herein is a first method of manufacturing an artificial turf fiber, wherein the method comprises: co-extruding three material streams into a monofilament, wherein:
- a first material stream, the core polymer stream, comprises or consists of an aged polymer and forms the core of the monofilament,
- a second material stream, the cladding polymer stream, comprises or consists of a virgin polymer and forms a cladding layer of the monofilament, and
- a third material stream, the barrier stream, forms a barrier layer in the monofilament between the core and the cladding layer, said barrier layer being adapted to inhibit the migration of molecules from the core to the cladding layer.

The co-extrusion can be performed, for example, via a triple-stream co-extrusion nozzle having three concentrically arranged material pathways.

The three co-extruded material streams may be quenched in a quenching unit, e.g., in a water bath. The extrusion temperature of the three material streams can preferably adapted for each stream individually to ensure the viscosity of the respective type of material is low enough for the extrusion process. Typically, the extrusion temperature will be between 160°C an 250°C.

In this embodiment, the dimensions of the extrusion nozzle is preferably chosen such that the thickness of the barrier layer stream is high enough to prevent formation of high extrusion-resistant forces. As a consequence, the thickness of the barrier layer, according to some examples, is at least 1 µm, in some cases at least 10 µm.

According to one example, the barrier stream comprises or consists of ethylene ethyl acrylate copolymers. Ethylene ethyl acrylate copolymers are produced by reacting ethylene with acrylic acid ethyl ester. These copolymers offer excellent barrier properties, thermal stability, and flexibility while ensuring strong adhesion across a wide temperature range.

Also disclosed herein is a second method of manufacturing an artificial turf fiber. The method comprises:
- co-extruding a first and a second material stream through an extrusion die into a monofilament, wherein the first material stream, the core polymer stream, comprises a barrier substance and an aged polymer, and wherein the second material stream, the cladding polymer stream, surrounds the core polymer stream and comprises or consists of a virgin polymer; and
- quenching the co-extruded core polymer stream and the cladding polymer stream in a quenching unit to form the monofilament, wherein the cladding polymer stream forms a cladding layer that surrounds the core of the monofilament; wherein the barrier substance and the distance between the extrusion die and the quenching unit are selected such that:
   the barrier substance migrates to the surface of the core polymer stream before the monofilament reaches the quenching unit,
   and that the migrated barrier substance forms a barrier layer between the core and the cladding layer,
   and that the barrier layer is adapted to inhibit the migration of molecules from the core to the cladding layer.

For example, cladding polymer stream may consist of virgin polyethylene, the barrier layer may be made of a barrier substance having a molecular weight of less than 600 g/mol, in particular of less than 300 g/mol, e.g., ethylene ethyl acrylate (EEA) having a molecular weight of 226.27 g/mol, and the core polymer may be a blend of 15 % aged polyethylene and 85% virgin polyethylene. The extrusion may be performed using a twin-screw extruder operating at 180-250°C. The extrusion die may be a monofilament spinneret with a capillary diameter of 0.1-0.9 mm. The quenching unit can be a water bath maintained at, for example, 10-30°C to rapidly solidify the extruded monofilament, and the distance between the extrusion die and the quenching unit may be 20-50 cm. These conditions will allow the barrier substance (the substance for inhibiting the migration of molecules from the core to the cladding layer, typically an acrylate, EEA in this example) to migrate to the surface of the core polymer stream before the monofilament reaches the quenching unit. Thanks to the high temperature and fluid dynamics within the extruded monofilament, the EEA that is initially homogeneously mixed with the core polymer is able to reach the surface of the core polymer stream very quickly. As a result, the migrated EEA forms a barrier layer between the core and the cladding layer.

The barrier layer formed based on a migration of the barrier substance before the fiber is quenched is typically thin, often less than 10 µm, e.g., less than 5 µm, e.g., less than 1.0 µm. For example, the barrier layer may be 0.01 µm to 10.0 µm thick.

The barrier layer inhibits the migration of molecules (e.g., additives, or degradation byproducts, PFAS, etc.) from the core to the cladding layer.

Also disclosed herein is a third method of manufacturing an artificial turf fiber. The method comprises:
- extruding a core polymer stream through an extrusion die into a core filament, wherein the core polymer stream comprises a barrier substance and an aged polymer,
- quenching the extruded core polymer stream in a quenching unit to form a core monofilament, wherein the barrier substance and the distance between the extrusion die and the quenching unit is chosen such that the barrier substance is allowed to migrate to the surface of the core polymer stream before it reaches the quenching unit, the barrier substance thereby forming a barrier layer on the surface of the quenched core monofilament;
- encasing the core monofilament with a cladding polymer layer, in particular by spraying the core monofilament with the liquid cladding polymer, or by drawing the core monofilament through a bath of liquid cladding polymer;
- allowing the applied cladding polymer to harden and form a barrier layer, thereby producing a multilayer monofilament, wherein a core comprising or consisting of the aged polymer is enclosed by the barrier layer, and the barrier layer is enclosed by the cladding layer, wherein the barrier layer is adapted to inhibit the migration of molecules from the core to the cladding layer.

For example, the extrusion machine and quenching unit may be of the same or similar type and configuration as used for the second method, and the same or similar process parameters and barrier substances may be used. The barrier substance will migrate to the surface of the core monofilament before it is quenched and form a barrier layer that surrounds the core monofilament.

According to some examples, the cladding polymer layer is applied by spraying the core monofilament with liquid cladding polymer, e.g., liquid virgin PE having a temperature of above 140°C, e.g., 180-220°C. A continuous coating system, e.g., a polymer spray unit, may be used. According to other examples, the core monofilament is drawn through a bath of molten cladding polymer, e.g., virgin PE. For example, the bath may be maintained at 150-200°C. This process may be performed in a polymer immersion bath system.

As a result, a multi-layer monofilament is generated which comprises the core monofilament as its core, which comprises the barrier layer surrounding the core, and comprises the cladding layer surrounding the barrier layer.

After having manufactured the monofilament via one of the above-mentioned methods, the quenched monofilament may be stretched to improve mechanical properties. It may be further processed e.g. by texturizing the monofilament.

According to some examples, the barrier layer comprises or consists of an acrylate.

The core polymer stream of the first, second and third method can be, for example, a multi-phase system in which a thread polymer forms beads within a base polymer, and wherein the beads are surrounded by a compatibilizer. For example, the thread polymer can be the aged polymer and the base polymer can be a further virgin polymer that may be of the same type or of a different type than the virgin polymer in the cladding layer.

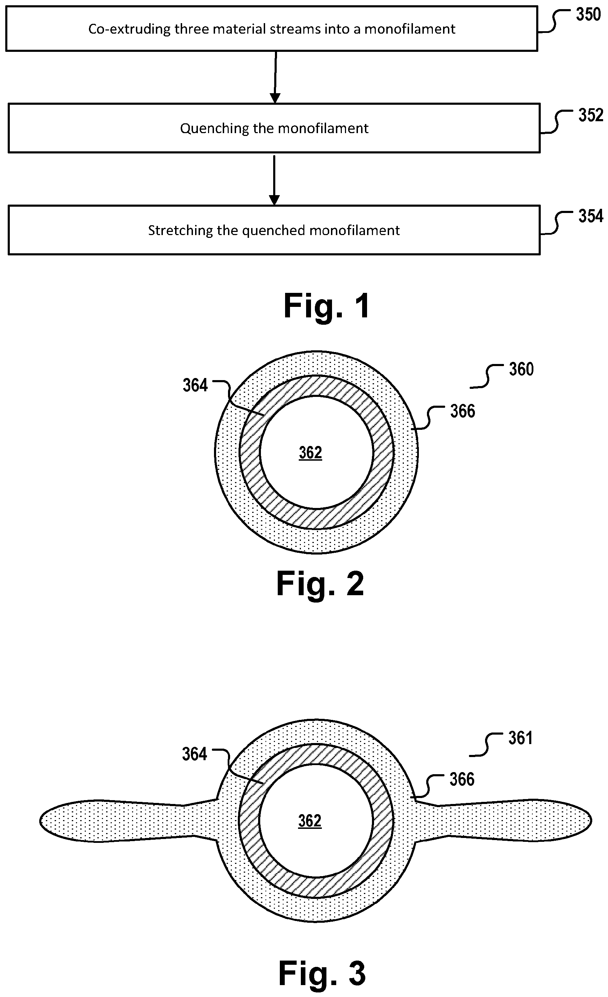

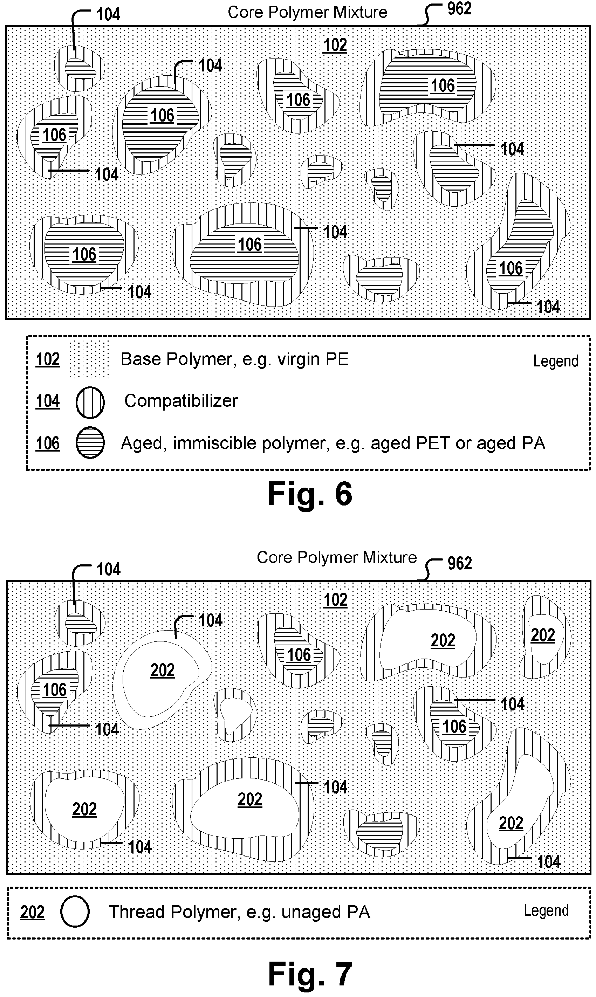

Figure 1 is a flow chart of a first method of manufacturing an artificial turf fiber. In a first step 350, three material streams are co-extruded through an extrusion plate comprising one or more co-extrusion nozzles into one monofilament per nozzle. The three material streams comprise a core polymer stream, a barrier stream, and a cladding polymer stream. The core polymer stream comprises one or more aged polymers and optionally also one or more virgin polymers. Some examples for the preparation of the core polymer mixture are described with reference to figures 6 and 7, but it is also possible to use single-phase blends of aged and virgin polymers.

For example, the extrusion may be performed at a temperature of 160°C-290°C, in particular between 230°C and 280°C.

The extrusion may be performed at an extrusion pressure of 50-200 bar. The extrusion conditions may vary depending on the type of polymers comprised in the core and cladding polymer mixture.

The core polymer mixture can be prepared, for example, by blending 50 wt% of aged polyethylene (PE) with 50 wt% virgin PE. The PE granules are dried to remove moisture, and additives such as UV stabilizers or processing aids may optionally be incorporated. The mixture of aged and virgin PE granules is then fed into a container of the extruder, where it is melted to form a homogeneous, liquid core polymer mass with a viscosity low enough for effective extrusion.

The cladding polymer may be prepared similarly by melting virgin PE granules in a separate container. An acrylate material, used as the barrier layer, is added to a third container of the extruder. The contents of these three containers are fluidly connected to the co-extrusion nozzles of the extruder. In some examples, the polymer granules are introduced into the respective containers via a hopper.

Inside the extruder, the materials added to the containers are melted as they travel through a series of temperature-controlled heating zones via separate pathways. Lower temperatures are typically maintained near the feed zone to prevent premature melting, while higher temperatures near the die ensure complete melting and homogeneity of the polymer. During the extrusion step 350, the two polymer streams and the liquid barrier material are pushed through a spinneret or extrusion die configured for producing monofilaments. The die includes precisely designed orifices to achieve the desired fiber diameter and layer thicknesses.

As the monofilament exits the die, it is immediately quenched in step 352, e.g., by passing the monofilament through a quenching bath filled with water or another cooling medium at temperatures ranging typically from 10°C to 30°C. Quenching rapidly solidifies the polymer, stabilizing the monofilament's dimensions and preventing deformation.

Next in an optional step 354, the quenched monofilament is reheated to a stretching temperature between 80°C and 110°C, depending on the polymer's melting point and grade. The fiber is then stretched, e.g., by passing it through a series of rollers operating at increasing speeds. The stretching ratio typically ranges from 2:1 to 6:1. This step orients the polymer chains along the fiber's axis, improving tensile strength and elasticity.

After stretching, and some optional post-processing steps, the finished monofilament is wound onto spools or bobbins for further processing, such as tufting into a carrier for artificial turf.

Figure 2 is a cross-section of an artificial turf fiber 360 comprising a core 362, a barrier layer 364, and a cladding layer 366, arranged concentrically. The fiber is designed to optimize safety, durability, and sustainability by incorporating distinct material layers with specialized compositions and technical functions.

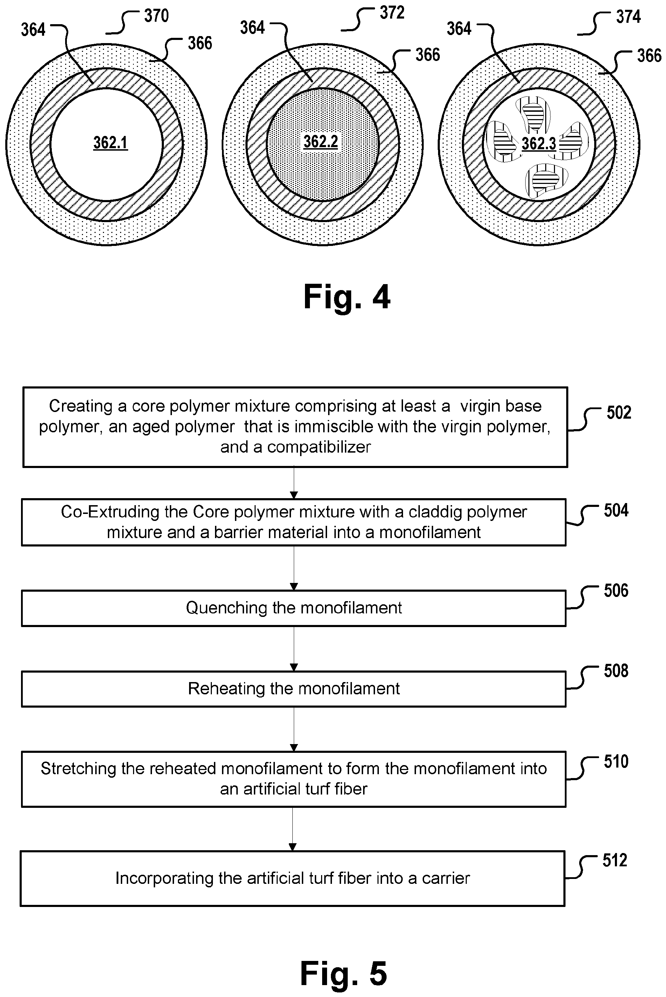

The core 362 consists of or comprises an aged polymer. As illustrated in figure 4 in greater detail, the aged polymer may optionally be blended or otherwise combined with one or more virgin polymers, e.g., virgin PE, PP or PA, and preferably PE, to enhance mechanical properties and processing efficiency.

The barrier layer 364 is positioned between the core 362 and the cladding layer 366. It is composed of a material that inhibits migration of toxic substances that may be comprised in the aged polymer in the core to the surface of the fiber. For example, the barrier layer may be composed of an acrylate or a blend of acrylates with other polymers, e.g., polyethylene, polyamide or polypropylene. Additives like antioxidants or UV-stabilizers may also be included to enhance barrier properties and environmental resistance. The barrier layer 364 is engineered to inhibit the migration of potentially harmful molecules, such as PFAS, phthalates, heavy metals, and polycyclic aromatic hydrocarbons (PAHs), from the core 362 to the cladding layer 366.

The cladding layer 366 comprises or consists of a virgin polymer, such as polyethylene or polypropylene, selected for its mechanical robustness and UV resistance. This layer is free of harmful substances, ensuring safety in end-use applications. Preferably, the cladding layer is free of aged polymer, meaning it consists of one or more virgin polymer and one or more optional additives such as fillers, pigments, UV-protectants, etc. The cladding layer 366 forms the outermost surface of the fiber, providing durability, resistance to environmental degradation (e.g., UV radiation), and a safe, inert interface for users.

A concentric arrangement of the layers enhances the fiber's structural integrity and ensures the functional separation of the core and cladding materials. The use of the barrier layer 364 effectively addresses safety concerns associated with the migration of harmful substances, enabling the sustainable use of recycled materials in artificial turf.

In some examples, the core constitutes approximately 20-40% of the cross-section of the extruded fiber, the barrier layer typically accounts for less than 5 %, in particular less than 1 % of the cross-section, and the cladding layer occupies the remaining portion of the cross-section.

Figure 3 is a cross-section of another example 361 of an artificial turf fiber. In contrast to the artificial turf fiber example 360, the fiber depicted in figure 3 comprises two wings which are made of the cladding polymer and hence are part of the cladding layer 366.

Figure 4 shows cross-sections of three other artificial turf fiber examples 370, 372, 374.

Artificial turf fiber example 370 has a core 362.1 that completely consists of the aged polymer or a combination of two or more different aged polymers, and some optional additives. The core does not comprise a virgin polymer. This example may have the advantage that a large amount of aged polymer (per weight unit of the fiber) can be reused, thereby drastically increasing the amount of aged plastics that does not end up in a landfill, but is rather re-used.

Artificial turf fiber example 372 has a core 362.2 that is a blend of one or more aged polymers with one or more virgin polymers. For example, the blend in the core may comprise 5 % to 70%, in particular 5% to 60%, e.g., 10% to 30%, the aged polymer, e.g., aged PE. The rest may be one or more virgin polymers which are miscible with the aged polymer, e.g., virgin PE if the aged polymer is completely or predominantly composed of aged PE. Hence, the core 362.2 of the fiber 372 is an example for a single-phase blend of one or more aged polymers with one or more virgin polymers which are miscible with the aged polymer(s).

Artificial turf fiber example 374 has a core 362.3 that is formed by extruding a multi-phase system, where discrete domains (or "beads") of a polymer referred to as "thread polymer" are embedded within a matrix of another polymer referred to as "base polymer", wherein the domains are surrounded by a compatibilizer. The thread polymer is not miscible with the base polymer, but the compatibilizer minimizes material incompatibilities by acting as an emulsifier, ensuring a uniform distribution of the thread polymer beads in the matrix of base polymer, thereby contributing to a robust fiber core. Typically, the thread polymer consists of or comprises the aged polymer. The base polymer typically consists of or comprises a virgin polymer which may be of the same or of a different type as the virgin polymer in the cladding layer.

According to embodiments, about 5% to 10% by weight of the core polymer mixture consist of the compatibilizer. The core polymer mixture comprises 60 to 99 percent by weight the virgin polymer, the rest consists of the one or more aged polymers.

In some examples, the aged polymer may be more rigid than the virgin polymer, and may increase the strength and stiffness of the fiber core, and hence of the whole fiber. Examples of the three-phase systems used for generating the core 362.3 are described in greater detail with reference to figures 6 and 7.

According to still further examples (not shown), the core 362 is made by extruding a three-phase system, wherein the three phase system comprises a base polymer that is a single-phase blend of a virgin polymer (e.g. virgin PE) with an aged polymer that is miscible with the virgin polymer (e.g., aged PE). The three-phase system comprises domains ("beads") consisting of one or more aged polymers which are not miscible with the virgin polymer, e.g., aged PA. The beads are surrounded by a compatibilizer. For example, this three-phase system of the core polymer mixture may be created by mixing the virgin polymer (e.g. virgin PE) with plastic waste comprising a mixture of different aged polymer types. One or more of these aged polymer types, e.g., aged PE, may be miscible with the virgin polymer and may form a single-phase blend acting as the base polymer. One or more other ones of the aged polymers (e.g. aged PA) may be immiscible with the virgin polymer and may form the beads. Hence, in some examples, the core polymer mixture represents a combination of the core polymer mixtures 362.2 (single-phase-blend) and 362.3 (three-phase-system).

In some embodiments, the liquid core polymer mixture may comprise multiple different compatibilizers that are used for emulsifying different types of aged polymers which are not miscible with the virgin polymer (e.g. because they are polar while the virgin polymer is apolar or vice versa). Using multiple different compatibilizers may ensure that any type of aged polymer that is immiscible with the virgin polymer forms polymer beads surrounded by the compatibilizer.

A "blend" as used herein is a homogeneous mixture of two or more different but miscible polymer types. In particular, a blend can be a single-phase system of two or more different polymers.

A "compatibilizer" as used herein is a substance, often a polymeric agent, that enhances the miscibility and adhesion between chemically distinct polymer components, such as polyethylene (PE) and polyamide (PA).

An "artificial turf fiber" as used herein is a synthetic fiber made of one or more monofilaments that is used in artificial turf applications, such as sports floors, playgrounds or landscaping.

As used herein, a material described as "free of" a particular substance may include being substantially free of that substance. This means that trace amounts, which are unavoidable due to ubiquitous presence in this and similar materials, may be considered acceptable. However, the material does not contain the substance in an amount that is physiologically effective or potentially harmful to a human being.

A "virgin polymer" as used herein is a polymer that is not derived from plastic waste, but is rather an unaged polymer, i.e., it is either fabricated by the artificial turf fiber manufacturer or fabricated by a supplier of the fiber manufacturer and has not been used in any product before being used for creating the polymer mixture. A virgin polymer can be, for example, a polymer that has not been previously installed and used at a use site, and that has not been previously recycled, ensuring its high purity and consistent performance. For example, a virgin polymer may be a polymer freshly manufactured in a chemical process, e.g., a polymerization reaction.

An "aged polymer" as used herein is a polymer material that has is not a virgin polymer any more. For example, an aged polymer can be a polymer that has undergone physical, chemical, or mechanical degradation due to environmental exposure, processing, or extended use, resulting in changes to its molecular structure, mechanical properties, or performance characteristics. Aging may be caused by factors such as heat, UV radiation, oxidation, hydrolysis, mechanical stress, or chemical exposure. Aged polymers often exhibit reduced tensile strength, brittleness, discoloration, or other signs of deterioration, which can impact their recyclability and reprocessing. For example, an aged polymer may have been exposed to an outdoor environment for at least 1 year, or for at least 3 years, or for at least 5 to 15 years, which is the typical usage life of artificial turf.

The "core of a monofilament refers to the central portion of the monofilament.

The expression "inhibit migration" may encompass reducing the migration of molecules from the core to the cladding layer to a defined degree or to completely prevent migration, depending on the material properties and intended function of the barrier layer. For example, to inhibit migration of a substance may imply ensuring that less than 20%, in particular less than 10%, or even less than 1% of a substance comprised in the core immediately after extrusion reaches the outer surface of the cladding layer in the course of 5 years. In some embodiments, the migration of the substance is prohibited completely.

Figure 5 is a flowchart of a method of manufacturing artificial turf using a multi-phase core polymer mixture. A core polymer mixture is created in step 502 by combining a virgin polymer that is used as base polymer, a compatibilizer, and aged plastic ("plastic waste") in a heatable container, e.g., an extruder. The aged plastic will comprise or consist of at least one aged polymer that is immiscible with the base polymer, but that is emulsified by the compatibilizer to form beads within the base polymer phase when the components of the core polymer mixture are heated above the melt temperature of the components. For example, the plastic waste may consist of aged PA and the base polymer may be virgin PE, and the compatibilizer may induce the formation of PA beads surrounded by the compatibilizer and embedded in the virgin PE polymer.

Optionally, a further thread-polymer can be added to the core polymer mixture as a further component. For example, virgin PA could be added, so the virgin PE base polymer may surround beads comprising one or more of: a) only the aged PA, b) beads comprising only the virgin PA, and c) beads comprising a blend of aged PA and virgin PA. The beads are surrounded by a compatibilizer. Adding a further thread polymer, typically a virgin version of the aged polymer that is immiscible with the virgin base polymer, the resulting liquid core polymer mixture will also comprise beads whose polymer material is less brittle than the polymer material in the beads consisting of the aged polymer. This may ensure that the thread-like regions (or "threads") generated from the beads by extruding and optionally stretching the fiber will comprise threads made of virgin polymer, e.g., PA, which are less brittle but nevertheless more rigid than the virgin PE used as the base polymer, thereby improving the mechanical robustness of the fiber.

In addition, in some examples, an acrylate or acrylate-polymer blend may be prepared, and the cladding polymer mixture may be prepared. Preferably, the cladding polymer predominantly consists of the same type of polymer that is used as the virgin polymer component of the core polymer mixture.

In steps 504, 506, 508, 510 and 512 the core polymer mixture, the cladding polymer mixture and the barrier material are co-extruded into a monofilament which is then quenched, and optionally reheated, stretched and incorporated into a carrier as described already with reference to figure 1.

Step 512, the incorporation of the monofilament into the carrier, may be implemented through methods such as tufting, knitting, gluing, or weaving the artificial turf fiber into a carrier mesh. Alternatively, it is possible to interweave the artificial turf fibers with additional turf fibers to form the carrier, combining the manufacturing of the carrier and the integration of the fibers into a single step. Optionally, the artificial turf fibers may be further secured within the carrier by applying a liquid backing ("secondary backing") to at least one side of the carrier containing the integrated fibers. This application of the secondary backing is optional; for instance, if the artificial turf fibers are woven into the carrier, this step may not be necessary. In certain examples, the extruded monofilaments are bundled and integrated into the carrier as bundles.

During the extrusion, the three liquid mixtures or substances pass the extrusion tool, i.e., a spinneret plate or a wide slot nozzle, forming the three concentrically arranged material streams into a monofilament comprising a core concentrically surrounded by a barrier layer made of the barrier material stream, and a cladding layer made of the cladding polymer stream. When the monofilament is quenched or cooled in a water spin bath, and is dried and stretched by passing rotating heated godets with different rotational speeds and/or a heating oven, the beads or droplets of the aged polymers (and/or thread polymers), surrounded by the compatibilizer, are stretched into a longitudinal direction and form small, fiber like, linear structures that stay completely embedded in the polymer matrix of the base polymer.

Figure 6 illustrates an example for a core polymer mixture 962 being a three phase system. The liquid core polymer mixture can be prepared, for example, as follows: plastic waste is shredded into aged polymer granules. The aged polymer granules are mixed with a compatibilizer. The compatibilizer can be, for example, maleic anhydride grafted on polyethylene or other types of compatibilizers mentioned herein. Color pigments, UV and thermal stabilizers, process aids, and other substances that are as such known from the art can optionally be added to the mixture. The aged polymer granules may comprise one or more aged polymers 106 that are immiscible with the virgin polymer to be added later (referred to as "base polymer"), and optionally may comprise one or more aged polymers that are miscible with the base polymer. This may result in a system in which beads of the immiscible aged polymer(s) are surrounded by the compatibilizer 104. The exact composition of the aged polymers may be unknown. For example, the plastic waste that is used for creating the polymer mixture (and that comprises the immiscible polymer and optionally further miscible or immiscible with the base polymer) can be derived from heterogeneous plastic waste. The heterogeneous plastic waste can comprise, e.g., old PET bottles, old artificial turf fibers, ocean plastic, plastic debris collected from biogas plants, or combinations thereof. Some of the different immiscible polymer types may be miscible with each other in a liquid state and form into beads surrounded by the compatibilizer. Other polymer components of the plastic waste material may not be miscible with the polymers in the beads but may be miscible with the virgin polymer part of the base polymer and hence will blend with this virgin polymer to form the base polymer phase, e.g., a blend of aged and virgin PE.

In a second step, the virgin polymer to be used as the base polymer is added to the core polymer mixture. In one example, the quantity of the virgin polymer (to be used e.g. as the base polymer or main component of the base polymer) is about 50 to 80 % by weight of the core polymer mixture to be generated. In some embodiments, the one or more aged polymers (that are miscible or immiscible with the base polymer) are e.g. 15% to 40 % by weight of the polymer mixture and of the compatibilizer is about 5% to 10% by weight of the polymer mixture.

The liquid cladding polymer mixture can be prepared, for example, by heating granules of a virgin polymer to obtain a liquid cladding polymer mixture. Optionally, color pigments, UV and thermal stabilizers, process aids, and other substances can be added to the cladding polymer mixture. Typically, but not necessarily, the virgin polymer of the cladding polymer is of the same type as the base polymer, as it may facilitate the extrusion process and the selection of appropriate temperature and pressure values to have similar polymer materials in the core and in the cladding. For example, the virgin polymer used in the cladding polymer mixture and the base polymer 102 of the core polymer mixture 962 may be PE.

In addition, a barrier substance, preferably EEA, or a blend of the barrier substance and a polymer (e.g., PE), is added to the extruder.

Using a triple-stream extruder with an extrusion nozzle and channel system configured for concentrically co-extruding the above-mentioned three material streams will result in the formation of multi-layered monofilaments as illustrated for example in figures 2-4.

The virgin polymer 102 is an unaged polymer and may constitute, for example, at least 60% by weight of the core polymer mixture 962. In some examples, more than 80 % or more than 90 % of the core polymer mixture 962 consists of the virgin polymer. The virgin polymer and the immiscible polymer 106 (which can also be a blend of two or more different polymers both being immiscible with the virgin polymer) are immiscible. Therefore, the base polymer and the IM polymer 106 form two separate phases when the core polymer mixture is heated above the melting temperature of all polymers added to the mixture. The compatibilizer forms a third phase and prevents the separation of the base polymer and the immiscible polymer into two large separate volumes by surrounding and embedding beadlike volumes of the immiscible, aged polymer within the base polymer phase. This embedding of a small volume of one phase within another phase is referred herein as "emulsification." The compatibilizer 104 emulsifies the immiscible aged polymer 106 within the base polymer phase 102.

According to one example, 20% of the core polymer mixture 962 consists of the aged polymer, e.g., old PA collected from an old, PA-based artificial turf field or other PA-based waste products. About 75 % of the core polymer mixture consists of the virgin polymer, e.g., PE. Five percent of the polymer mixture may consist of the compatibilizer.

According to another example, 7% of the core polymer mixture 962 consists of the aged polymer, e.g., old PET derived from plastic waste comprising PET polymers, e.g., some plastic bottles. About 88 % of the core polymer mixture consists of the virgin polymer, e.g., PE, and about 5% of the polymer mixture consists of the compatibilizer.

The core polymer mixture 962 can be, for example, a multi-phase system (in particular, a system comprising at least three phases: a base polymer phase which completely or predominantly consists of a virgin polymer, a compatibilizer phase, and an immiscible, aged polymer phase which forms domains or "beads" in the base polymer phase. The immiscible, aged polymer can be a single type of aged polymer or can be a blend of two or more different types of IM polymers that are miscible with each other but not with the base polymer. The base polymer can be a single type of virgin polymer or can be a blend of two or more different types of virgin and optionally also aged polymers that are miscible with each other but not with the polymer beads.

The cladding polymer mixture (not shown) is preferably made of PE to ensure that the artificial turf fiber core to be created from the core polymer mixture has a smooth and elastic surface.

Figure 7 shows a further example of a core polymer mixture 962. The polymer mixture 962 is a four-phase system (virgin polymer ("base polymer") 102, compatibilizer 104, immiscible aged polymer 106, thread-polymer 202). As explained already for the core polymer mixture depicted in figure 5, the immiscible aged polymer can be a single type of aged polymer or can be a blend of two or more different types of aged, immiscible polymers that are miscible with each other but not with the base polymer. The base polymer can be a single type of a virgin polymer or can be a blend of two or more different types of virgin polymers that are miscible with each other but not with the immiscible aged polymer(s). The thread-polymer 202 of the polymer mixture is a polymer that is immiscible with the base polymer and that is emulsified by the compatibilizer within the base polymer phase such that beadlike structures are formed that are then transformed by the extrusion process and optional stretching steps into threads. The tread polymer may in some embodiments be or comprise a virgin polymer, e.g., virgin PA.

The beads in the core polymer mixture depicted in figure 7 comprise a thread polymer that is not miscible with the base polymer. The thread polymer can be a virgin polymer or an aged polymer or a blend thereof that is not miscible with the base polymer. The thread-polymer is preferably a polymer that is more rigid in solid state than the base polymers. As a consequence, the thread-polymer improves the ability of artificial turf fibers to re-erect after and recover from being bent down by a ball or by the foot of a player.

In some examples, the thread-polymer is a virgin PA, and the base polymer is an aged PE or a blend of an aged PE and a virgin PE. PA in a solid state is more rigid than PE and is immiscible with the base polymer PE in a liquid state. The thread-polymer 202 may also be immiscible with an additional, immiscible aged thread polymer 106 (e.g., PET), e.g., due to different melting temperatures. In this case, the virgin PA forms a further phase that is separate from the phase of the base polymer and of the phase of the immiscible aged polymer 106.

Additionally adding a virgin thread polymer that is immiscible with the base polymer and that preferably is more rigid than the base polymer may be advantageous as it may not be known whether a particular batch of plastic waste comprises a sufficient amount of a polymer that is immiscible with the base polymer and is adapted to increase the rigidity of the fiber by forming threads. Hence, adding a virgin thread-polymer, e.g., virgin PA, may ensure that at least a minimum number of threads are generated irrespective of the composition of the currently processed plastic waste batch.

According to one example, about 70 % of the core polymer mixture 962 of figure 7 consists of the base polymer, e.g., PE; 5% of the polymer mixture consists of the compatibilizer. At least 4% of the core polymer mixture 962, e.g., about 5 %, consists of a thread-polymer 202 (e.g., virgin PA). About 21 % of the depicted core polymer mixture 962 consists of aged polymers (not shown). About a third of these aged polymers, i.e., about 7 % of the core polymer mixture, form immiscible polymer 106 beads, which are emulsified by the compatibilizer 104 and which are neither miscible with the base polymer nor with the thread-polymer. The rest of these aged polymers, i.e., about 14 % of the polymer mixture, are aged polymers that are miscible with the base polymer (not shown). Adding at least 4 % of the virgin PA to the polymer mixture may ensure that even in cases where the plastic waste does not comprise a "rigid" polymer type that is immiscible with the base polymer and that is emulsified by the compatibilizer, the extrusion process will generate threads within the fiber for increasing the resilience of the fiber.

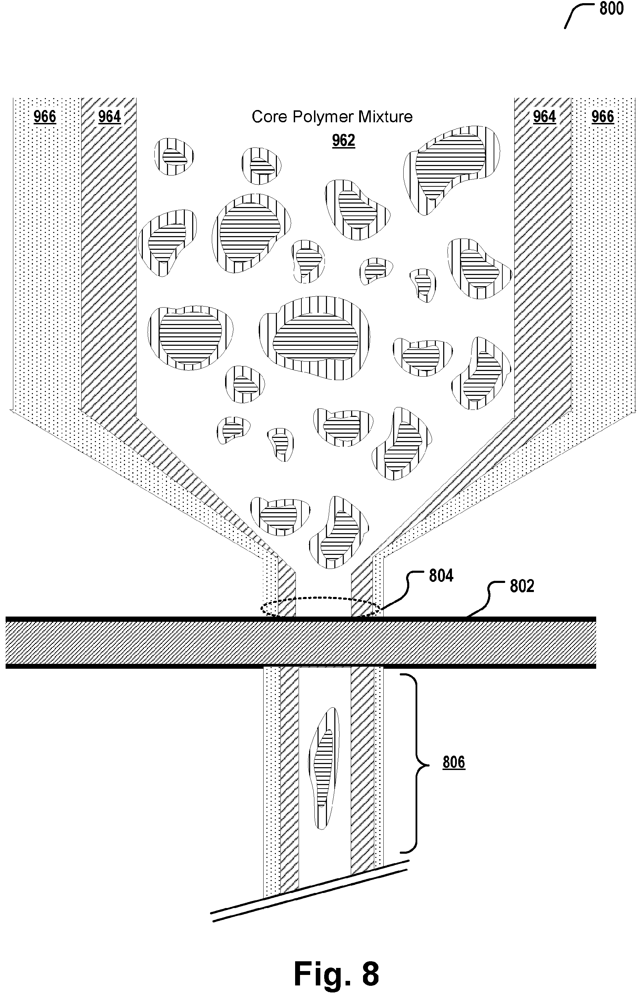

Figure 8 illustrates the extrusion of aged polymer beads comprised in the core polymer mixture 962 into the core of a multi-layered monofilament 806. Within the core polymer mixture 962 there are a large number of polymer beads. The polymer beads may be made of one or more polymers that are not miscible with the base polymer and are separated from the base polymer by a compatibilizer as described, for example, with reference to figures 5 and 6. A screw, piston, or other device is used to force the core polymer mixture 962 through a hole 804 in an extrusion plate 802. A barrier material stream 964 and a cladding polymer stream 966 concentrically surround the core polymer stream during extrusion and are co-extruded. This causes the three concentrically arranged material streams to be extruded into a monofilament 806. The core of the monofilament 806 is shown as containing a polymer bead that is elongated during the extrusion process to form a thread. In some examples, the virgin polymer of the core polymer mixture will be less viscous than the aged polymer(s) and/or thread-polymers in the beads, and the polymer beads will tend to concentrate in the center of the core of the monofilament 806. This may lead to desirable properties for the final artificial turf fiber, and this may lead to a concentration of the threads in the central region of the core of the monofilament 806.

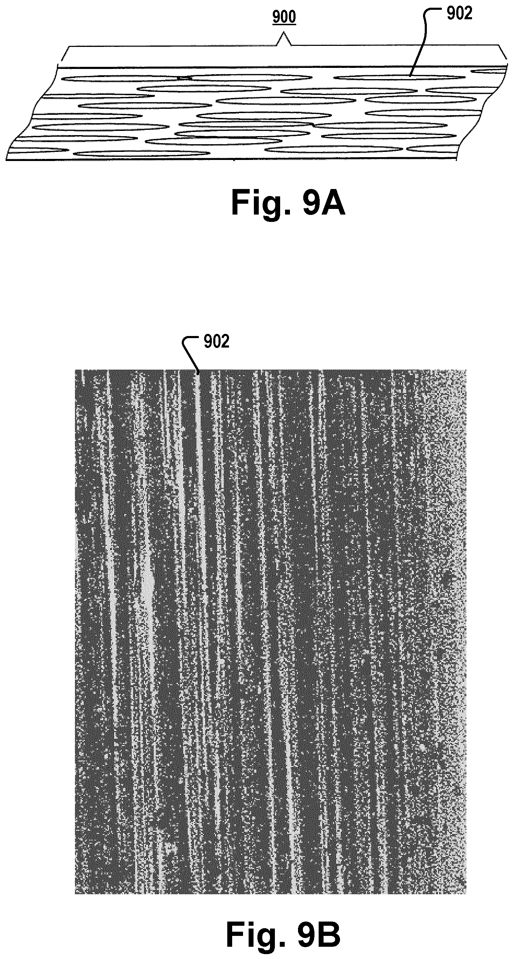

Figure 9A illustrates polymer threads comprised in a base polymer of the core of the extruded monofilament. The polymer threads are comprised in a small segment 900 of the monofilament and illustrates the effect of extruding and stretching the monofilament on the beads contained therein. The monofilament is again shown as comprising the base polymer with the polymer beads comprising the immiscible aged polymer and/or the thread-polymer mixed in. The polymer beads are separated from the base polymer by a compatibilizer, which is not shown. In Fig. 9A, an example of a cross-section of the core of a monofilament that has been extruded and stretched is shown. To form the threads, a section of the monofilament is heated and then stretched along the length of the monofilament. The polymer beads in Figs. 5 to 6 have been stretched into threads 902. The amount of deformation of the polymer beads would be dependent on the extrusion speed and upon how much the monofilament has been stretched

Figure 9B shows an electron microscope picture of a cross-section of the core of a stretched monofilament according to one example of the fiber. Figure 9B more faithfully reproduces the dimensions of the threads relative to the diameter of the monofilament than does the schematic drawing of Fig. 9A. The horizontal white streaks within the stretched monofilament are the threads 902. The threads 902 can be shown as forming small linear structures of the aged, immiscible polymer and/or the thread-polymer (or an aged, immiscible-polymer-thread-polymer-blend ) within the base polymer phase.

The resultant fiber may have multiple advantages, namely increased durability and long-term elasticity. In cases of different stiffness and bending properties of the polymers, the fiber can show a better resilience (this means that once a fiber is stepped on it will spring back). In cases of a stiff aged immiscible polymer and/or thread-polymer, the small linear fiber structures built into the polymer matrix are providing a polymer reinforcement of the fiber.

Delimitation due to the composite formed by the aged, immiscible polymer and base polymer is prevented due to the fact that the short fibers of the immiscible polymer are embedded in the matrix of the core given by the base polymer.

The aged polymer can be a polar substance, such as polyamide, whereas the base polymer can an apolar polymer, such as polyethylene. Alternatives for the aged polymer are PET or PBT, and for the base polymer, polypropylene. Finally, a core polymer mixture consisting of three polymers is possible (e.g., PET, PA, and PP), with PP creating the matrix and the others creating independently from other fibrous linear structures. The compatibilizer can be a maleic anhydride grafted on polyethylene or polyamide.

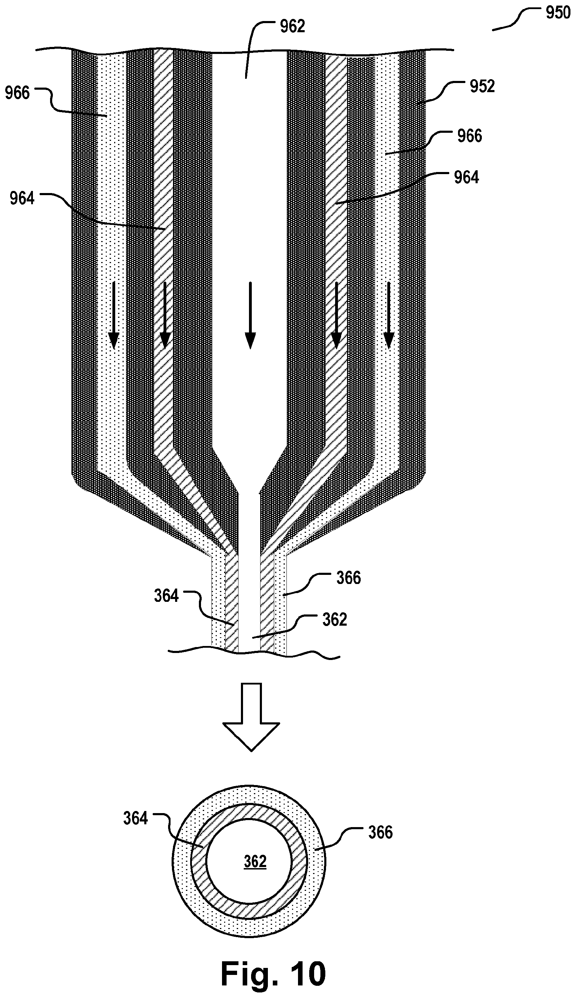

Figure 10 illustrates a coextrusion nozzle 950 comprising walls 952 arranged and configured for concentrically extruding three material streams that allows generating an artificial turf fiber monofilament having a core-barrier-cladding structure in a co-extrusion process.

The first mass 962, also referred to as a core polymer, is fed through a first opening into a duct that is located at the center of the extrusion head. A second mass 964, also referred to as barrier material, is fed through one or more further openings into a second duct that concentrically surrounds the first duct. A third mass 966, also referred to as cladding polymer, is fed through one or more further openings into a third duct that concentrically surrounds the second duct.

At first, the liquid cladding polymer 966, the barrier mass 964, e.g., EEA, and the core polymer 962 are transported along their respective ducts toward the opening of the extrusion head. The transportation of the material masses in their respective ducts is performed such that the three masses are transported in a basically laminar flow. While the three masses are transported in their respective ducts, an intermixing of the core and the cladding polymer mass is prohibited by the walls 952 of the inner ducts.

According to one example, the first duct used for transporting the core polymer mass is shorter than the second duct used for transporting the barrier mass, and the second duct is shorter than the third duct used for transporting the cladding polymer. As a result, the three masses get in contact with each other before they leave the extrusion nozzle through the opening. The portion where the core polymer, the barrier mass and the cladding polymer mass get in contact with each other and can intermix at the contact surfaces is referred herein as a "joining path" (not shown).

According to embodiments, the extrusion opening is located downstream of the joining path 960 wherein the core polymer, the barrier material and cladding polymer are allowed to contact each other while moving in a parallel, with a laminar flow toward the opening. This may allow the core polymer, the barrier, and the cladding polymer to intermix at the contact zone, thereby preventing a delamination of the cladding or of the core from the barrier layer.

The length, diameter, and feeding rate of both polymers and of the barrier material is chosen such that the three co-extruded masses contact each other such that a contact layer is formed between the core polymer mass and the barrier mass on the one hand, and between the barrier layer and the cladding polymer mass on the other hand. The contact layers comprise a mixture of the respective materials. This may be achieved by controlling the flow characteristics (streaming pattern, velocity distribution, viscosities, shear moduli, temperature, melt flow indices, etc.) during the joining such that a stable, small-scale turbulence is created, which causes the core (or cladding) polymer mass and the barrier material to intermix in a thin interfacing region. This may strengthen the cohesion between the core 362, the barrier layer 364 and the cladding layer 366 obtained as a result of the co-extrusion of the three material streams 962, 964, 966.

According to some examples, the diameter of the core polymer mixture at the upstream end of the joining path is between 0.5 and 1.5 mm, e.g., 1.25 mm. This may allow for adjusting the length of the joining path to the specific properties, such as viscosity, melt flow index, or shear modulus, of the polymer components to be brought into contact and to the specific process parameters, like temperature or pressure, to provide beneficial rheological properties for establishing a firm bond between the core and the cladding of the fiber. The flow in the joining path should be maintained at a stable, small-scale turbulence. If the length of the joining path is too long, turbulence may get suppressed by feedback of increased wall-polymer interaction. On the other hand, a too-short joining path may destroy the stability of the turbulence such that the contact layer becomes variable, e.g., in thickness and position. A fiber produced with a too-short joining region may show no beneficial surface properties anymore which are supposed to arise from a clear distinction between the core and cladding.

According to some embodiments, the core of the fiber has a diameter of 50 to 600 micrometers, the barrier layer has a thickness of about 1 to 10 micrometers, and the cladding is formed with a minimum thickness of 25 to 300 micrometers in all directions extending radially from the core. Each of the protrusions, if any, may be formed in some examples with a radial extension in a range of two to 10 times the radius of the core.

The mentioned ranges for the core diameter and the minimum cladding thickness may be beneficial for providing the desired degree of stiffness and a sufficient amount of cladding material surrounding the core to form the mechanically robust contact layer. Said ratio of the radial extension of the protrusions with respect to the core radius may be chosen so as to improve the biomimetic properties of the artificial turf and the surface-to-mass ratio of the artificial turf fibers.

According to embodiments, the core polymer mass is free from at least one of the following components of the cladding: a wax, a dulling agent, a UV stabilizer, a flame retardant, an antioxidant, a fungicide, a pigment, and combinations thereof. It may be beneficial to use one or more of the mentioned additives only in the cladding where they are actually needed. This may allow for a more cost-effective production method, as fewer additives are consumed per unit length of the artificial turf fiber.

According to embodiments, the core polymer is high-density polyethylene (HDPE) and the cladding polymer is a linear low-density polyethylene (LLDPE). In liquefied form, this combination may feature a high miscibility with each other as well as rheological properties that are optimized for forming a firm bond between core and cladding via the barrier layer by means of co-extrusion. When formed into a monofilament for producing an artificial turf fiber according to the examples described herein, the two solidified polymers may provide further advantages: HDPE is denser and more rigid than LLDPE, which may, thus, add to the resilience of the artificial turf fiber, while LLDPE is soft and wear-resistant, which may provide a reduced risk of injury and enhanced durability.

The opening of the extrusion head can have a circular profile, resulting in a monofilament profile as depicted in the lower part of figure 10. Alternatively, the opening can have a noncircular profile. According to embodiments, the resulting monofilament profile comprises one or more protrusions that extend from the core in opposite directions, as depicted in figure 3.

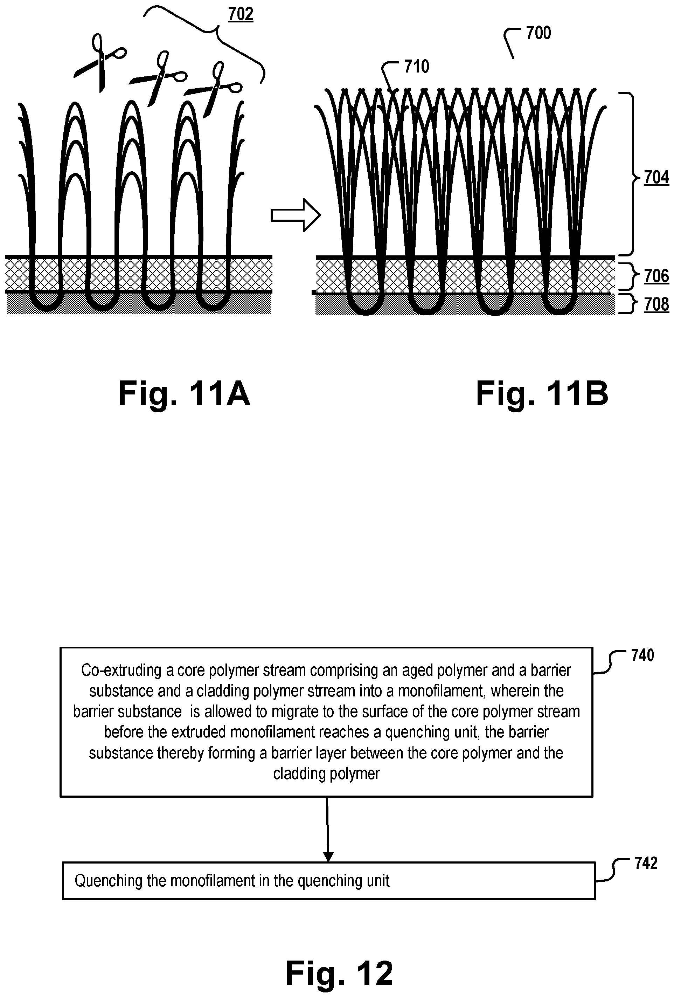

Fig. 11 shows a cross-section of an example of artificial turf 700 and shows the integration of artificial turf fibers 710 in a carrier 706. The artificial turf 700 comprises a secondary backing 708 that may, e.g., be latex-based or PU-based. Artificial turf fiber 710 has been tufted into the carrier 706, e.g., a textile carrier mesh. The backing 708 is on the lower side of the carrier and embeds U-shaped portions of the integrated fibers, thereby serving to bind or secure the artificial turf fiber 710 to the artificial turf carrier. The backing 708 may be optional. For example, the artificial turf fibers 710 may be alternatively woven into the carrier mesh. Various types of glues, coatings, or adhesives could be used for the backing 708. The artificial turf fibers 710 are shown as extending a distance 704 above the artificial turf carrier 706. The distance is essentially the height of the pile of the artificial turf fibers. According to some examples, the artificial tur fibers 710 comprise threads in its core, wherein the length of the threads within the artificial turf fibers is half of the distance 704 or less.

Figure 12 is a flow chart illustrating a co-extrusion-based method for manufacturing an artificial turf fiber, in which a core polymer stream comprising a barrier substance and a cladding polymer stream are co-extruded to form a monofilament with a barrier layer. The process comprises the following steps:

In a co-extrusion step 740, a first material stream (core polymer stream 962) and a second material stream (cladding polymer stream 966) are co-extruded through a monofilament extrusion die into a monofilament 806. The core polymer stream comprises aged polymer, such as recycled polyethylene (rPE), recycled polypropylene (rPP), and/or polyamide (rPA), which may have a melt flow index (MFI) of 1-5 g/10 min at 190°C (2.16 kg load). A barrier substance, such as an acrylate, preferably an acrylate of low molecular weight, is comprised in the core polymer stream. The cladding polymer stream consists of a virgin polymer, such as high-density polyethylene (HDPE), linear low-density polyethylene (LLDPE), or polypropylene (PP), which may for example have an MFI of 0.5-5 g/10 min. The extrusion may be performed using a twin-screw extruder, and the extrusion temperature of the core polymer and of the cladding polymer may be 180-250°C.

Upon the extruded monofilament leaving the extrusion die, the barrier substance migrates to the surface of the core before the monofilament reaches the quenching unit, thereby forming a barrier layer 364 between the core 362 and the cladding layer 366. The barrier layer inhibits the migration of harmful substances that might potentially be comprised in the aged polymer from the core to the cladding layer, ensuring long-term safety of the fibers.

The co-extruded monofilament is directed into a quenching unit, where it is rapidly cooled and solidified in step 742. For example, the quenching unit may be a water bath maintained at 10-30°C or air-cooling system having a die-to-bath distance of 20-50 cm to allow controlled migration of the barrier substance before solidification.

This co-extrusion method may enable the production of a highly uniform, multilayer monofilament, with integrated core, barrier, and cladding layers in a single continuous step.

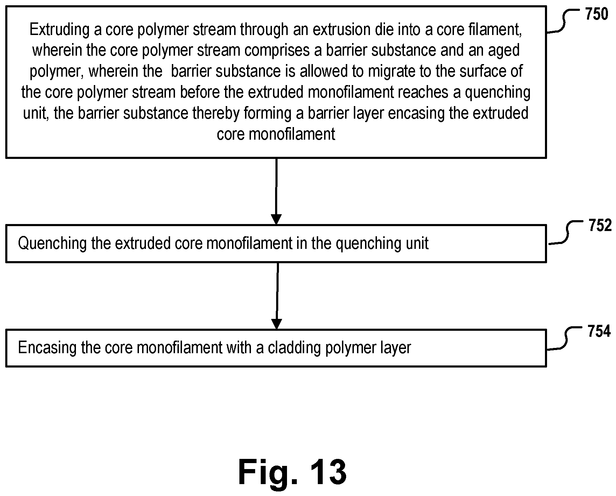

Figure 13 is a flow chart illustrating a further extrusion-based method for manufacturing an artificial turf fiber, in which a core polymer stream comprising a barrier substance is extruded to form a core monofilament with a barrier layer that is then encased in the cladding polymer in a later step. The process comprises the following steps:

In step 750, a core polymer stream 962 is extruded through a monofilament extrusion die to form a core filament. The core polymer stream may comprise, for example, one or more aged polymers (e.g., recycled PE, PP, or PA) and a barrier substance, e.g., an acrylate. The core polymer stream may be extruded, for example, at a temperature of 180-250°C. The die-to-quenching-unit distance is chosen such that the barrier substance is able to migrate to the surface before the extruded core monofilament reaches the quenching unit and solidifies in quenching step 752. For example, a die-quenching-bath distance of 20-50 cm may be used. The migrated barrier substance forms a barrier layer 364 on the surface of the quenched core monofilament.

After the quenched core monofilament has solidified, it is enchased with a cladding polymer layer in step 754. For example, a liquid cladding polymer may be sprayed at the quenched core monofilament, or the quenched core monofilament may be drawn through a bath of molten cladding polymer.

This sequential extrusion and coating method allows for precise control over the thickness of the cladding layer, providing flexibility in process adjustments.

### REFERENCE SIGNS LIST

- 102: virgin polymer in the core polymer mixture
- 104: compatibilizer used to surround aged polymer beads
- 106: aged polymer in the core polymer mixture
- 202: thread polymer included in the core polymer mixture
- 350-354: steps
- 360: artificial turf fiber
- 361: artificial turf fiber
- 362: Core of the artificial turf fiber
- 362.1: Core made entirely of aged polymer
- 362.2: Core made of a blend of aged and virgin polymers
- 362.3: Core made of a multi-phase system
- 364: barrier layer positioned between the core and the cladding layer
- 366: cladding layer
- 370: artificial turf fiber example
- 372: artificial turf fiber example
- 374: artificial turf fiber example
- 502-512: steps
- 700: artificial turf
- 702: tuft loop cutting
- 704: distance
- 706: carrier
- 708: backing
- 710: fibers
- 740-756: steps
- 802: extrusion plate used in the co-extrusion process
- 804: hole in the extrusion plate
- 806: multi-layered monofilament comprising a core, barrier layer, and cladding layer
- 900: segment of the monofilament core showing threads
- 902: Threads formed from stretched polymer beads
- 950: Co-extrusion nozzle for creating concentric layers
- 952: walls of the co-extrusion nozzle.
- 962: core polymer mixture
- 964: barrier material stream
- 966: cladding polymer stream

## Claims

1. An artificial turf fiber (360, 361, 370, 372, 374) comprising:
- a core (362) comprising or consisting of an aged polymer,
- a cladding layer (366) comprising or consisting of a virgin polymer, and
- a barrier layer (364) positioned between the core and the cladding layer, said barrier layer being adapted to inhibit the migration of molecules from the core to the cladding layer.

2. The artificial turf fiber of claim 1, wherein the barrier layer is being adapted to inhibit migration of at least one of:
- Per- and Polyfluoroalkyl Substances -PFAS,
- Perfluorooctane Sulfonates - PFOS,
- PFAS precursor compounds, in particular fluorotelomer alcohols and fluorotelomer sulfonates and their decay products, in particular short-chained (< 8 carbon atom backbone) PFAS precursor compounds;
- Release agents, e.g., silicone-based release agents, or fluoropolymer-based release agents
- Siloxanes,
- Plasticizers, in particular oils,
- Phthalates, e.g., DEHP, DBP, BBP;
- Heavy metals;
- Polycyclic Aromatic Hydrocarbons (PAHs);
- Substances with a molecular weight of more than 400 g/mol, in particular of more than 200 g/mol.

3. The artificial turf fiber of any one of claims 1-2, wherein the cladding layer is free of at least one of:
- Per- and Polyfluoroalkyl Substances -PFAS,
- Perfluorooctane Sulfonates - PFOS,
- PFAS precursor compounds, in particular fluorotelomer alcohols and fluorotelomer sulfonates and their decay products, in particular short-chained (< 8 carbon atom backbone) PFAS precursor compounds;
- Release agents, e.g., silicone-based release agents, or fluoropolymer-based release agents
- Siloxanes,
- Plasticizers, in particular oils,
- Phthalates, e.g., DEHP, DBP, BBP;
- Heavy metals; and
- Polycyclic Aromatic Hydrocarbons (PAHs).

4. The artificial turf fiber of any one of the previous claims, wherein the barrier layer comprises or consists of an acrylate.

5. The artificial turf fiber of claim 4, wherein the acrylate is selected from a group comprising:
- ethylene ethyl acrylate (EEA);
- ethylene butyl acrylate (EBA);
- ethylene methyl acrylate (EMA);
- ethylene acrylate copolymer (EA);
- ethylene glycidyl methacrylate (EGMA);
- poly(ethyl acrylate) (PEA),
- an acrylate-functionalized compatibilizer, in particular one or more of:
• Glycidyl Methacrylate (GMA),
• a graft copolymer or block copolymer of Styrene-Ethylene-Butylene-Styrene (SEBS) with glycidyl methacrylate,
• a graft copolymer or block copolymer of polypropylene with an acrylate, e.g., with ethyl acrylate or with glycidyl methacrylate;
• a graft copolymer or block copolymer of polyethylene with an acrylate, e.g., with ethyl acrylate or with a glycidyl methacrylate.

6. The artificial turf fiber of claim 4 or 5, wherein the acrylate is ethylene ethyl acrylate (EEA).

7. The artificial turf fiber of any one of the previous claims, wherein the core comprises the aged polymer and a further virgin polymer, and wherein the aged polymer forms threads oriented parallel to the longitudinal axis of the monofilament, wherein the threads are surrounded by a compatibilizer and are embedded within a matrix of the further virgin polymer.

8. The artificial turf fiber of any one of the previous claims, wherein the core, the barrier layer, and cladding layer are concentrically arranged.

9. The artificial turf fiber of any one of the previous claims, wherein the barrier layer comprises a blend of the acrylate with another polymer, wherein in particular the other polymer is a polymer being of the same type as the virgin polymer of the cladding polymer, in particular PE, PP or PA.

10. The artificial turf fiber of any one of the previous claims, wherein the core comprises a blend of the aged polymer and a further virgin polymer.

11. An artificial turf comprising a carrier and comprising a plurality of artificial turf fibers according to any one of the previous claims, wherein the artificial turf fibers are integrated in the carrier.

12. A method of manufacturing an artificial turf fiber (360, 361, 370, 372, 374) comprising: co-extruding (350) three material streams into a monofilament (806), wherein:
- a first material stream, the core polymer stream (962), comprises or consists of an aged polymer and forms the core (362) of the monofilament,
- a second material stream, the cladding polymer stream (966), comprises or consists of a virgin polymer and forms a cladding layer (366) of the monofilament, and
- a third material stream, the barrier stream (964), forms a barrier layer (364) in the monofilament between the core and the cladding layer, said barrier layer being adapted to inhibit the migration of molecules from the core to the cladding layer.

13. The method of claim 12, wherein the co-extrusion is performed via a triple-stream co-extrusion nozzle (950) having three concentrically arranged material pathways.

14. A method of manufacturing an artificial turf fiber (360, 361, 370, 372, 374) comprising:
- co-extruding (740) a first and a second material stream through an extrusion die into a monofilament (806), wherein:
the first material stream, the core polymer stream (962), comprises a barrier substance and an aged polymer,
the second material stream, the cladding polymer stream (966), surrounds the core polymer stream and comprises or consists of a virgin polymer; and
- quenching (742) the co-extruded core polymer stream and the cladding polymer stream in a quenching unit to form the monofilament, wherein the cladding polymer stream forms a cladding layer (366) that surrounds the core (362) of the monofilament;
wherein the barrier substance and the distance between the extrusion die and the quenching unit are selected such that:
- the barrier substance migrates to the surface of the core polymer stream before the monofilament reaches the quenching unit,
- the migrated barrier substance forms a barrier layer (364) between the core and the cladding layer,
- the barrier layer (364) is adapted to inhibit the migration of molecules from the core to the cladding layer.

15. A method of manufacturing an artificial turf fiber (360, 361, 370, 372, 374) comprising:
- extruding (750) a core polymer stream (962) through an extrusion die into a core filament, wherein the core polymer stream comprises a barrier substance and an aged polymer,
- quenching (752) the extruded core polymer stream in a quenching unit to form a core monofilament;
wherein the barrier substance and the distance between the extrusion die and the quenching unit is chosen such that the barrier substance is allowed to migrate to the surface of the core polymer stream before it reaches the quenching unit, the barrier substance thereby forming a barrier layer (364) on the surface of the quenched core monofilament;
- encasing (754) the core monofilament with a cladding polymer layer, in particular by spraying the core monofilament with the liquid cladding polymer, or by drawing the core monofilament through a bath of liquid cladding polymer;
- allowing the applied cladding polymer to harden and form a barrier layer, thereby producing a multilayer monofilament, wherein a core comprising or consisting of the aged polymer is enclosed by the barrier layer, and the barrier layer is enclosed by the cladding layer, wherein the barrier layer is adapted to inhibit the migration of molecules from the core to the cladding layer.

16. The method of any one of the previous claims 12-15, wherein the core polymer stream is a multi-phase system in which the aged polymer forms beads within a further virgin polymer (102), and wherein the beads are surrounded by a compatibilizer (104).
